# EUROPEAN PATENT APPLICATION

(11) **EP 4 492 546 A1**
(43) Date of publication of application: **15.01.2025**
(21) Application number: 24183996.8
(22) Date of filing: 24.06.2024
(51) Int. Cl.: H01M 50/176, B23K 20/10, H01M 50/188, H01M 50/557

(54) **MANUFACTURING METHOD FOR TERMINAL FOR ELECTRICAL ENERGY STORAGE DEVICE, AND MANUFACTURING METHOD FOR ELECTRICAL ENERGY STORAGE DEVICE**

(30) Priority: 07.07.2023 JP 2023112281
(71) Applicant: Prime Planet Energy & Solutions, Inc., Chuo-ku Tokyo 103-0022 (JP)
(72) Inventor: YAMADA, Kohei, Tokyo, 103-0022 (JP)
(74) Representative: Kuhnen & Wacker Patent- und Rechtsanwaltsbüro PartG mbB

(57) **Abstract**

The present disclosure provides a manufacturing method for a terminal (40) including a first conductive member (41) that is formed of a first metal and includes a concave part (41r) and a penetration hole (41h), a second conductive member (42) that is formed of a second metal and includes a part (42n) disposed in the concave part (41r), and an ultrasonic bonding part (45) where the first conductive member (41) and the second conductive member (42) are bonded to each other with ultrasonic waves in a periphery of the penetration hole (41h). This manufacturing method includes a disposing step of disposing a part of the second conductive member (42) in the concave part (41r) of the first conductive member (41), and a bonding step of bonding the periphery of the penetration hole (41h) of the first conductive member (41) to the second conductive member (42) with ultrasonic waves.

## Description

### BACKGROUND OF THE DISCLOSURE

### 1. Field

The present disclosure relates to a manufacturing method for a terminal for an electrical energy storage device, and a manufacturing method for the electrical energy storage device.

### 2. Background

Conventionally, a terminal formed by bonding conductive members made of different kinds of metals (a first conductive member and a second conductive member) has been known (for example, see Japanese Patent Application Publication No. 2011-124024 and Japanese Patent Application Publication No. 2022-049729). For example, Japanese Patent Application Publication No. 2011-124024 discloses a manufacturing method for a terminal, including an ultrasonic bonding step of forming an ultrasonic bonding part by bonding a first conductive member and a second conductive member to each other with ultrasonic waves, and a caulking step of forming a fastening part by caulking (mechanically fastening) the first conductive member and the second conductive member.

### SUMMARY

In the ultrasonic bonding, ultrasonic vibration is applied while a hone is pressed against one conductive member so as to apply a pressing load thereto. According to the present inventor's examination, the conductive member where the hone is pressed at this time may be distorted or deformed unintentionally. This may result in the difficulty in caulking or lead to damage of the previously formed fastening part, so that the connection state between the first conductive member and the second conductive member may become unstable.

The present disclosure has been made in view of the above circumstances, and an object is to provide a manufacturing method for a terminal for an electrical energy storage device, and a manufacturing method for the electrical energy storage device, by which a connection state between a first conductive member and a second conductive member becomes stable easily.

The present disclosure provides a manufacturing method for a terminal for an electrical energy storage device including: a first conductive member that is formed of a first metal and includes, on a first surface, a concave part and a penetration hole provided in the concave part; a second conductive member that is formed of a second metal, which is different from the first metal, and includes a part disposed in the concave part; an ultrasonic bonding part where the first conductive member and the second conductive member are bonded to each other with ultrasonic waves in a periphery of the penetration hole; and a fastening part where the first conductive member and the second conductive member are mechanically fastened on an outer peripheral side relative to the ultrasonic bonding part. This manufacturing method includes a disposing step of disposing a part of the second conductive member in the concave part of the first conductive member, and a bonding step of bonding the periphery of the penetration hole of the first conductive member to the second conductive member with ultrasonic waves after the disposing step.

According to the aforementioned manufacturing method, the state in which the connection state between the first conductive member and the second conductive member is stable can be suitably achieved.

The above and other elements, features, steps, characteristics and advantages of the present disclosure will become more apparent from the following detailed description of the preferred embodiments with reference to the attached drawings.

### BRIEF DESCRIPTION OF THE DRAWINGS

FIG. 1 is a perspective view illustrating schematically an electrical energy storage device according to an embodiment;
FIG. 2 is a schematic longitudinal cross-sectional view taken along line II-II in FIG. 1;
FIG. 3 is a partial enlarged cross-sectional view illustrating schematically a vicinity of a negative electrode terminal;
FIG. 4 is a perspective view illustrating schematically the negative electrode terminal according to an embodiment;
FIG. 5 is a schematic side view of the negative electrode terminal in FIG. 4;
FIG. 6 is a schematic longitudinal cross-sectional view taken along line VI-VI in FIG. 4;
FIG. 7 is a partial enlarged cross-sectional view illustrating schematically a main part in FIG. 6;
FIG. 8 is a perspective view illustrating schematically a battery pack according to an embodiment;
FIG. 9 is a longitudinal cross-sectional view illustrating schematically one example of a bonding step;
FIG. 10 is a longitudinal cross-sectional view illustrating schematically one example of a caulking step;
FIG. 11A is a plan view illustrating schematically an ultrasonic bonding part according to a modification, and FIG. 11B is an explanatory view for describing a relation between a vibrating direction and the arrangement of a hone; and
FIG. 12A is a view corresponding to FIG. 10 according to a first modification, and FIG. 12B is a view corresponding to FIG. 10 according to a second modification.

### DETAILED DESCRIPTION OF THE PREFERRED EMBODIMENTS

Preferred embodiments of the art disclosed herein will be explained next with reference to the accompanying drawings. Matters that are other than matters particularly mentioned in the present specification and that are necessary for the implementation of the present disclosure (for example, the general configuration and manufacturing process of an electrical energy storage device that do not characterize the present disclosure) can be grasped as design matters of those skilled in the art based on the prior art in the relevant field. The art disclosed herein can be realized on the basis of the disclosure of the present specification and common technical knowledge in the relevant field.

### <Electrical energy storage device 100>

First, an electrical energy storage device manufactured by a manufacturing method disclosed herein is described. Note that in the present specification, the term "electrical energy storage device" refers to general devices that are capable of being charged and discharged repeatedly, and corresponds to a concept encompassing storage batteries such as lithium ion secondary batteries and nickel-hydrogen batteries and capacitors such as lithium ion capacitors and electrical double-layer capacitors.

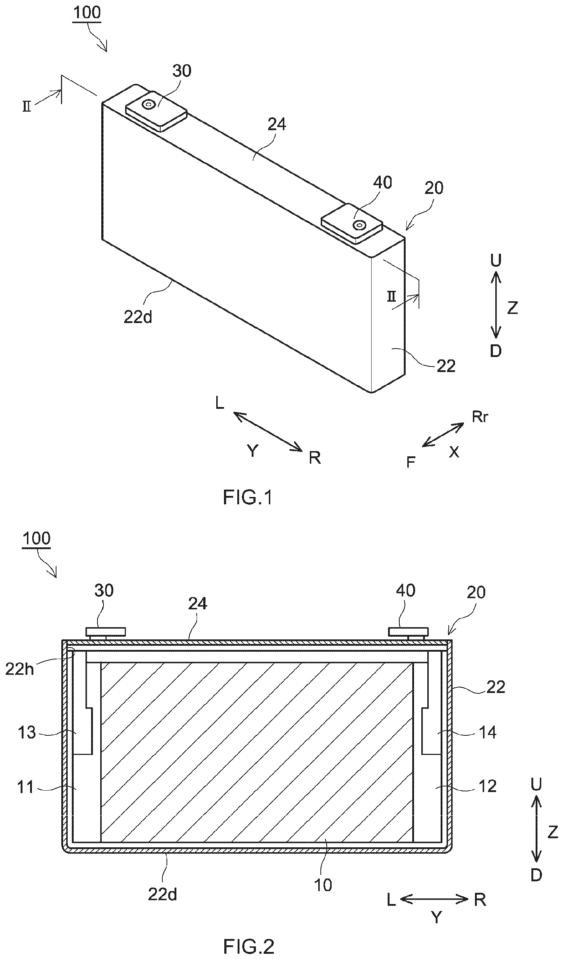

FIG. 1 is a perspective view of an electrical energy storage device 100. FIG. 2 is a schematic longitudinal cross-sectional view taken along line II-II in FIG. 1. In the explanation below, the reference signs L, R, U, and D in the drawings represent respectively left, right, up, and down, and the reference signs X, Y and Z in the drawings represent respectively a short side direction of the electrical energy storage device 100, a long side direction orthogonal to the short side direction, and an up-down direction. However, the foregoing are merely directions for convenience of explanation, and do not limit in any way the manner in which the electrical energy storage device 100 is installed.

As illustrated in FIG. 2, the electrical energy storage device 100 includes an electrode body 10, a battery case 20, a positive electrode terminal 30, and a negative electrode terminal 40. The electrical energy storage device 100 is characterized by including the positive electrode terminal 30 and/or negative electrode terminal 40 disclosed herein; the other features of the electrical energy storage device 100 may be similar to conventional ones. The electrical energy storage device 100 is preferably a secondary battery, and more preferably a nonaqueous electrolyte secondary battery. The electrical energy storage device 100 is a lithium ion secondary battery here. Although the illustration is omitted, the electrical energy storage device 100 further includes an electrolyte here. The electrical energy storage device 100 has a configuration in which the electrode body 10 and the electrolyte, which is not illustrated, are accommodated in the battery case 20.

The electrode body 10 may be similar to a conventional one, and is not particularly limited. The electrode body 10 has a positive electrode and a negative electrode (not illustrated). The electrode body 10 is, for example, a wound electrode body with a flat shape in which a positive electrode with a band shape and a negative electrode with a band shape are stacked through a separator with a band shape in an insulated state and wound using a winding axis as a center. In another embodiment, however, the electrode body 10 may be a stack type electrode body formed in such a manner that a square (typically, rectangular) positive electrode and a square (typically, rectangular) negative electrode are stacked in the insulated state. One of the positive electrode and the negative electrode is one example of "first electrode" while the other is one example of "second electrode".

The positive electrode includes a positive electrode current collector 11 and a positive electrode mix layer (not illustrated) adhered onto the positive electrode current collector 11. The positive electrode current collector 11 is, for example, formed of a conductive metal such as aluminum, an aluminum alloy, nickel, or stainless steel. The positive electrode mix layer contains a positive electrode active material (for example, a lithium-transition metal complex oxide). The negative electrode includes a negative electrode current collector 12 and a negative electrode mix layer (not illustrated) adhered onto the negative electrode current collector 12. The negative electrode current collector is, for example, formed of a conductive metal such as copper, a copper alloy, nickel, or stainless steel. The negative electrode mix layer contains a negative electrode active material (for example, a carbon material such as graphite).

As illustrated by oblique lines in FIG. 2, in a central part of the electrode body 10 in the long side direction Y, a multilayer part is formed that results from stacking of the positive electrode mix layer and the negative electrode mix layer while being insulated from each other. Meanwhile, at a left end part of the electrode body 10 in the long side direction Y, a part of the positive electrode current collector 11 where the positive electrode mix layer is not formed (positive electrode current collector exposed part) protrudes out of the multilayer part. A positive electrode current collecting member 13 is attached to the positive electrode current collector exposed part. The positive electrode current collecting member 13 may be formed of the same metal material as that of the positive electrode current collector 11, for example, a conductive metal such as aluminum, an aluminum alloy, nickel, or stainless steel. The positive electrode current collecting member 13 electrically connects the positive electrode and the positive electrode terminal 30 inside the battery case 20.

At a right end part of the electrode body 10 in the long side direction Y, a part of the negative electrode current collector 12 where the negative electrode mix layer is not formed (negative electrode current collector exposed part) protrudes out of the multilayer part. A negative electrode current collecting member 14 is attached to the negative electrode current collector exposed part. The material (metal species) of the negative electrode current collecting member 14 may be different from that of the positive electrode current collecting member 13. The negative electrode current collecting member 14 may be formed of the same metal species as that of the negative electrode current collector 12, for example, a conductive metal such as copper, a copper alloy, nickel, or stainless steel. The negative electrode current collecting member 14 electrically connects the negative electrode and the negative electrode terminal 40 inside the battery case 20.

The electrolyte may be similar to a conventional one, and is not particularly limited. The electrolyte is, for example, a nonaqueous liquid electrolyte (nonaqueous electrolyte solution) that contains a nonaqueous solvent and a supporting salt. The nonaqueous solvent includes, for example, a carbonate such as ethylene carbonate, dimethyl carbonate, or ethyl methyl carbonate. The supporting salt is, for example, a fluorine-containing lithium salt such as LiPF₆. The electrolyte may be a solid (solid electrolyte), and may be integrated with the electrode body 10.

The battery case 20 is a housing that accommodates the electrode body 10. The battery case 20 is formed to have a flat bottomed cuboid shape (square shape) here. However, the shape of the battery case 20 is not limited to a square shape, and may be an arbitrary shape such as a cylindrical columnar shape. However, the material of the battery case 20 may be similar to a conventionally used material, and is not particularly limited. The battery case 20 is, for example, formed of a lightweight metal material with suitable thermal conductivity, such as aluminum, an aluminum alloy, or stainless steel. As illustrated in FIG. 2, the battery case 20 includes a case main body 22 having an opening part 22h, and a lid body (sealing plate) 24 that covers the opening part 22h. The battery case 20 preferably includes the case main body 22 and the lid body 24. The battery case 20 is integrated through bonding (for example, bonding by welding) of the lid body 24 to a peripheral edge of the opening part 22h of the case main body 22. The battery case 20 is hermetically sealed (closed).

The case main body 22 has a bottom surface 22d. The lid body 24 opposes the bottom surface 22d of the case main body 22. The lid body 24 is attached to the case main body 22 so as to cover the opening part 22h of the case main body 22. The lid body 24 has a substantially rectangular shape here. Note that in the present specification, the term "substantially rectangular shape" encompasses, in addition to a perfect rectangular shape (rectangle), for example, a shape whose corner connecting a long side and a short side of the rectangular shape is rounded, a shape whose corner includes a notch, and the like.

As illustrated in FIG. 1, the positive electrode terminal 30 and the negative electrode terminal 40 protrude out of the battery case 20. The positive electrode terminal 30 and the negative electrode terminal 40 protrude from the same surface (specifically, from the lid body 24) of the battery case 20 here. The positive electrode terminal 30 and the negative electrode terminal 40 may, however, protrude from mutually different surfaces of the battery case 20. The positive electrode terminal 30 and the negative electrode terminal 40 are disposed at opposite end parts of the lid body 24 in the long side direction Y The positive electrode terminal 30 and/or the negative electrode terminal 40 is one example of the terminal for the electrical energy storage device.

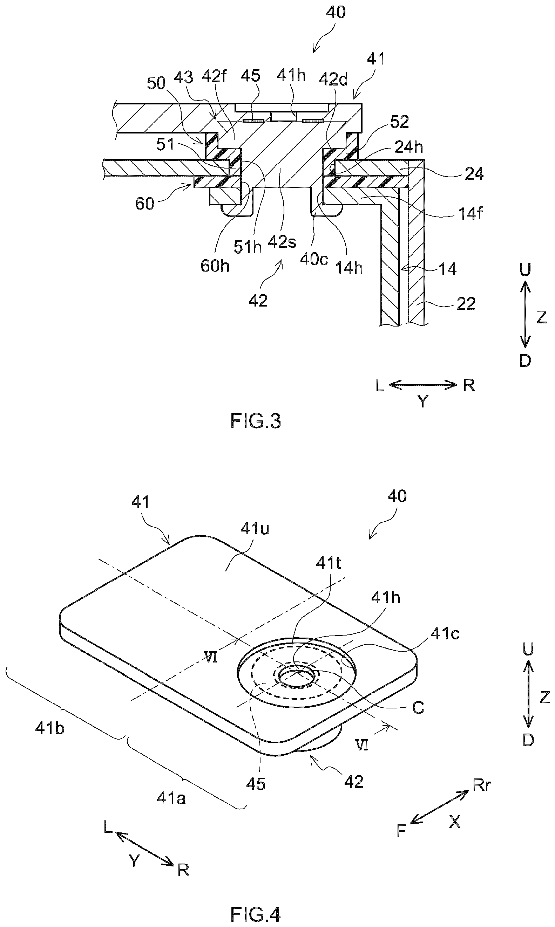

The positive electrode terminal 30 is electrically connected to the positive electrode of the electrode body 10 through the positive electrode current collecting member 13 inside the battery case 20 as illustrated in FIG. 2. The negative electrode terminal 40 is electrically connected to the negative electrode of the electrode body 10 through the negative electrode current collecting member 14 inside the battery case 20. The positive electrode terminal 30 and the negative electrode terminal 40 are attached to the battery case 20 (specifically, the lid body 24). The positive electrode terminal 30 and the negative electrode terminal 40 are preferably fixed to the battery case 20 (specifically, the lid body 24). The positive electrode terminal 30 and the negative electrode terminal 40 are insulated from the lid body 24 with a gasket 50 (see FIG. 3) and an insulator 60 (see FIG. 3) interposed therebetween.

FIG. 3 is a partial enlarged cross-sectional view illustrating schematically a vicinity of the negative electrode terminal 40. A terminal structure on the side of the negative electrode terminal 40 will be explained in detail below as an example, and the same may apply to a terminal structure on the side of the positive electrode terminal 30. In this case, "negative electrode" can be replaced by "positive electrode" as appropriate in the description below.

As illustrated in FIG. 3, a terminal extraction hole 24h penetrating in the up-down direction Z is formed in the lid body 24. The terminal extraction hole 24h is formed preferably in the lid body 24. Although the illustration is omitted, the terminal extraction hole 24h has a circular shape (for example, perfect circle shape) in a plan view here. The terminal extraction hole 24h has an inner diameter of a size that allows insertion of a shaft part 42s before a caulking process of the negative electrode terminal 40, which will be described below. The terminal extraction hole 24h is formed to be smaller than a flange part 42f of the negative electrode terminal 40, which will be described below.

The negative electrode current collecting member 14 is attached to the negative electrode current collector exposed part of the negative electrode current collector 12 to configure a conduction path that electrically connects the negative electrode and the negative electrode terminal 40. The negative electrode current collecting member 14 has a flat plate-shaped part 14f spreading horizontally along an inner surface of the lid body 24. A hole part 14h is formed in the flat plate-shaped part 14f at a position corresponding to the terminal extraction hole 24h. The hole part 14h has an inner diameter of a size that allows insertion of the shaft part 42s before the caulking process of the negative electrode terminal 40, which will be described below. The negative electrode current collecting member 14 is fixed to the lid body 24 together with the negative electrode terminal 40 through the caulking process in a state of being insulated by the insulator 60. The negative electrode current collecting member 14 is one example of the current collecting member.

The gasket 50 is an insulating member disposed between an upper surface (outer surface) of the lid body 24 and the negative electrode terminal 40. An insulating member (for example, gasket 50) is preferably disposed between the battery case 20 (for example, lid body 24) and the negative electrode terminal 40. The gasket 50 has functions of insulating the lid body 24 and the negative electrode terminal 40, and closing the terminal extraction hole 24h here. The gasket 50 is formed of a resin material having electrical insulating properties and being capable of deforming elastically, for example, fluororesin such as perfluoroalkoxy fluororesin (PFA), polyphenylene sulfide resin (PPS), aliphatic polyamide, or the like.

The gasket 50 has a cylindrical part 51 and a base part 52. The cylindrical part 51 prevents direct contact between the lid body 24 and the shaft part 42s of the negative electrode terminal 40. The cylindrical part 51 has a hollow tubular shape. The cylindrical part 51 has a hole part 51h penetrating in the up-down direction Z. The hole part 51h is formed so as to allow insertion of the shaft part 42s of the negative electrode terminal 40 before the caulking process. The cylindrical part 51 is inserted into the terminal extraction hole 24h of the lid body 24. The base part 52 prevents direct contact between the lid body 24 and the flange part 42f of the negative electrode terminal 40, which will be described below. The base part 52 is coupled to an upper end of the cylindrical part 51. The base part 52 extends in the horizontal direction from the upper end of the cylindrical part 51. The base part 52 is formed to have, for example, an annular shape so as to surround the terminal extraction hole 24h of the lid body 24. The base part 52 extends along the upper surface of the lid body 24. The base part 52 is held between a lower surface 42d of the flange part 42f of the negative electrode terminal 40 and the upper surface of the lid body 24, and is compressed in the up-down direction Z as a result of the caulking process.

The insulator 60 is an insulating member disposed between the lower surface (inner surface) of the lid body 24 and the negative electrode current collecting member 14. An insulating member (for example, insulator 60) is preferably disposed between the battery case 20 (for example, lid body 24) and the negative electrode current collecting member 14. The insulator 60 has a flat plate-shaped part spreading horizontally along the inner surface of the lid body 24. A hole part 60h is formed in the flat plate-shaped part at a position corresponding to the terminal extraction hole 24h. The hole part 60h has an inner diameter of a size that allows insertion of the shaft part 42s of the negative electrode terminal 40. The insulator 60 is formed of a resin material that has resistance against the electrolyte that is used, has electrical insulating properties, and is capable of deforming elastically; this resin material is, for example, fluororesin such as perfluoroalkoxy fluororesin (PFA), polyphenylene sulfide resin (PPS), or the like. The flat plate-shaped part of the insulator 60 is held between the lower surface of the lid body 24 and the upper surface of the negative electrode current collecting member 14, and is compressed in the up-down direction Z as a result of the caulking process.

### <Negative electrode terminal 40>

As illustrated in FIG. 3, the negative electrode terminal 40 is inserted into the terminal extraction hole 24h and extends from the inside to the outside of the battery case 20. As described below, the negative electrode terminal 40 is configured so that two kinds of conductive members, that is, a first conductive member 41 and a second conductive member 42 are integrated by a fastening part 43 and an ultrasonic bonding part 45. As illustrated in FIG. 3, the negative electrode terminal 40 is inserted into the terminal extraction hole 24h of the lid body 24 and the hole part 14h of the negative electrode current collecting member 14, and has a tip end part in the inserting direction (tubular part 42p to be described below) caulked onto the negative electrode current collecting member 14, specifically caulked to a peripheral part surrounding the hole part 14h of the negative electrode current collecting member 14. A caulking part 40c is formed at a lower end part of the negative electrode terminal 40. The negative electrode terminal 40 is fixed, through the caulking process, to the lid body 24, so as to be electrically connected to the negative electrode current collecting member 14. The caulking part 40c has a tubular shape here. The shape of the caulking part 40c, however, is not limited to the tubular shape and may have an optional shape such as a pillar shape. It is preferable to weld the caulking part 40c to the negative electrode current collecting member 14.

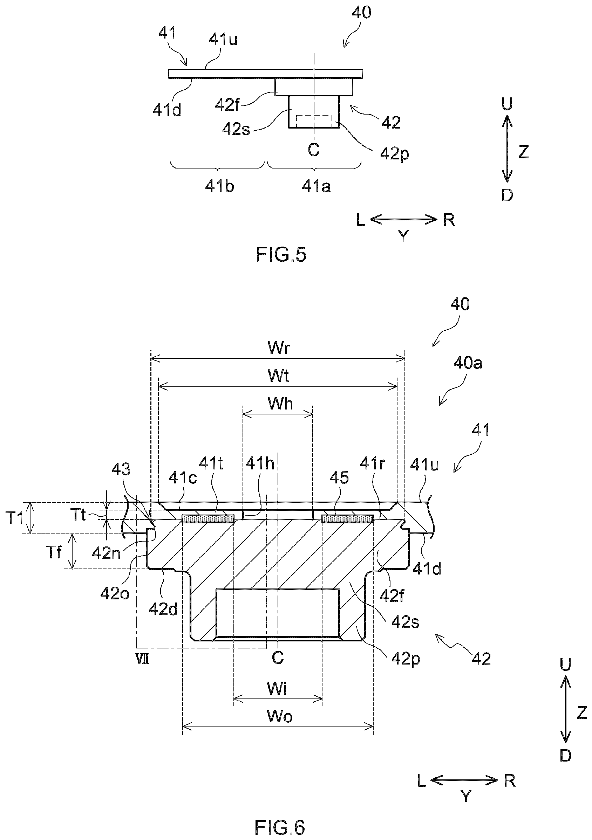

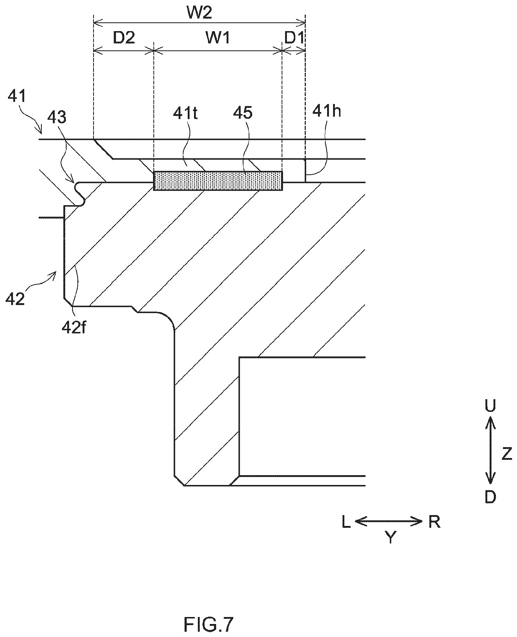

FIG. 4 is a schematic perspective view of the negative electrode terminal 40 before being attached to the lid body 24 (that is, before the caulking process). FIG. 5 is a schematic side view of the negative electrode terminal 40 in FIG. 4. FIG. 6 is a schematic longitudinal cross-sectional view taken along line VI-VI in FIG. 4. FIG. 7 is a partial enlarged cross-sectional view illustrating schematically a main part in FIG. 6. As illustrated in FIG. 6, the negative electrode terminal 40 includes the first conductive member 41, the second conductive member 42, the fastening part 43, and the ultrasonic bonding part 45. The first conductive member 41 and the second conductive member 42 are electrically connected to each other through the fastening part 43 and the ultrasonic bonding part 45.

The first conductive member 41 is a member disposed outside the battery case 20. The first conductive member 41 is formed of a first metal. The first conductive member 41 is formed of, for example, a conductive metal such as aluminum, an aluminum alloy, nickel, or stainless steel. The first conductive member 41 is preferably formed of aluminum or an aluminum alloy. The first conductive member 41 is formed of aluminum here. The first conductive member 41 is preferably formed of a metal with a smaller Vickers hardness (softer) than the second conductive member 42. The first conductive member 41 may be formed of the same metal as that of the positive electrode current collecting member 13, or may be formed of an alloy in which the same metal element constitutes a first component (i.e., the component with the highest content in a mass ratio; this similarly applies to the description below).

The first conductive member 41 preferably has a plate shape (specifically, flat plate shape). As illustrated in FIG. 4, in a plan view, the first conductive member 41 has an approximately rectangular shape with short sides and long sides here. As illustrated in FIG. 6, the first conductive member 41 has a thickness T1 of preferably 0.5 to 5 mm, more preferably 1 to 3 mm, and for example 1.8 mm. The thickness T1 of the first conductive member 41 is preferably smaller than the length of the short side in the plan view. The first conductive member 41 has a lower surface (first surface) 41d and an upper surface (second surface) 41u. The lower surface 41d is a surface on the side facing the battery case 20 (specifically, the lid body 24). The lower surface 41d is a surface in contact with the second conductive member 42. The upper surface 41u is a surface on the side apart from battery case 20 and the second conductive member 42.

As illustrated in FIG. 4 and FIG. 5, the first conductive member 41 includes two regions sectioned in the long side direction Y, that is, a connection part 41a electrically connected to the second conductive member 42 and an extension part 41b extending from the connection part 41a to one side in the long side direction Y (leftward in FIG. 4). As illustrated in FIG. 6, the connection part 41a here includes a first concave part 41r, a penetration hole 41h, a thin part 41t, and a second concave part 41c. In another embodiment, however, the thin part 41t and/or the second concave part 41c may be absent in the connection part 41a.

As illustrated in FIG. 6, the first concave part 41r is provided at the lower surface (first surface) 41d. Although the illustration is omitted, the first concave part 41r has a ring shape (for example, annular shape) surrounding the penetration hole 41h here in the plan view. Although not limited in particular, the first concave part 41r has an outer diameter (in a case of a perfect circle, a diameter, and in a case of a non-perfect circle, the minimum length passing a center) Wr of preferably 6 mm or more, for example. The first concave part 41r is formed to have a tapered shape with the diameter decreasing toward the lower surface 41d of the first conductive member 41 (in other words, as getting closer to the second conductive member 42) here. The flange part 42f (specifically, constriction part 42n) of the second conductive member 42, which will be described below, is inserted into the first concave part 41r. The first concave part 41r is one example of the concave part of the first surface.

As illustrated in FIG. 4, the penetration hole 41h is provided in the first concave part 41r. The penetration hole 41h penetrates the first conductive member 41 in the up-down direction Z. The penetration hole 41h is preferably provided at the thin part 41t and more preferably provided at a central part of the thin part 41t. The second conductive member 42 (specifically, flange part 42f which will be described below) is exposed from the penetration hole 41h at the upper surface 41u of the first conductive member 41. The penetration hole 41h has a circular shape (for example, perfect circular shape) in the plan view here. Although not limited in particular, as illustrated in FIG. 6, an outer diameter Wh of the penetration hole 41h (in a case of a perfect circle, a diameter, and in a case of a non-perfect circle, the minimum length passing a center) is typically smaller than the outer diameter Wr of the first concave part 41r and is preferably 5 to 7 mm, for example. The penetration hole 41h is provided on an inner peripheral side (central side) relative to the fastening part 43 and the ultrasonic bonding part 45.

As illustrated in FIG. 4, the thin part 41t is provided in the periphery of the penetration hole 41h. The thin part 41t has a ring shape (for example, annular shape) in the plan view here. As illustrated in FIG. 6, the thin part 41t is formed to be thinner than an outer peripheral part thereof (for example, extension part 41b). That is to say, the thin part 41t has a thickness Tt that is smaller than the thickness T1 of the first conductive member 41. Here, the thickness Tt of the thin part 41t is smaller than a thickness Tf of a part of the flange part 42f, which will be described below, that protrudes from the first concave part 41r. The thin part 41t is a region where the first concave part 41r and the second concave part 41c overlap with each other in the plan view here. It is preferable that the thin part 41t be provided in such a way that the second concave part 41c is formed on a surface (that is, upper surface 41u) on the side opposite to the lower surface 41d where the first concave part 41r is formed as described in this embodiment. Although not limited in particular, the thin part 41t has an outer diameter Wt (in a case of a perfect circle, a diameter, and in a case of a non-perfect circle, the minimum length passing a center) is preferably 7 to 14 mm, for example. The outer diameter Wt of the thin part 41t is smaller than the outer diameter Wr of the first concave part 41r here. In the thin part 41t, the ultrasonic bonding part 45 is provided. Thus, the ultrasonic bonding part 45 can be formed more stably.

The second concave part 41c is provided at the upper surface (second surface) 41u. As illustrated in FIG. 4, in the plan view, the second concave part 41c has a ring shape (for example, annular shape) surrounding the penetration hole 41h here. Although not limited in particular, in the plan view, the outer diameter of the second concave part 41c (here, equal to the outer diameter Wt of the thin part 41t; in a case of a perfect circle, a diameter, and in a case of a non-perfect circle, the minimum length passing a center) is smaller than the outer diameter Wr of the first concave part 41r here.

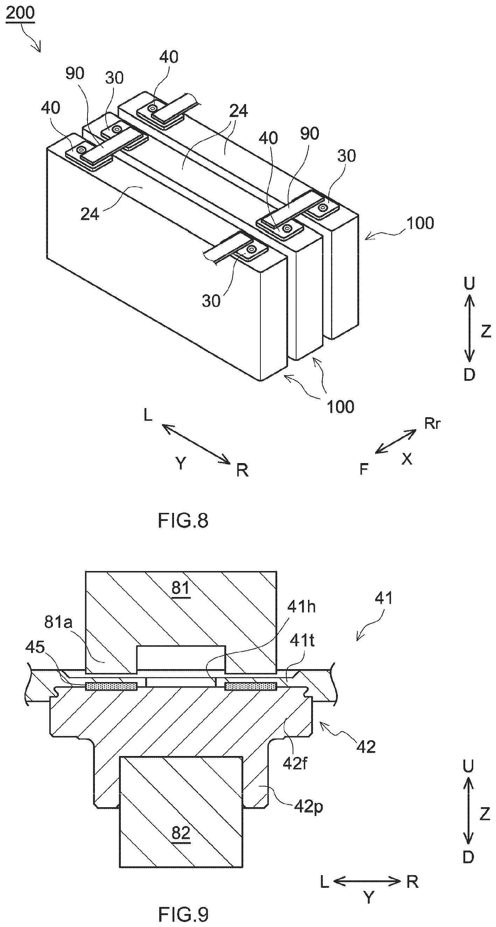

The extension part 41b is a part to which a bus bar 90 (see FIG. 8), which is a conductive member, is attached in a case where a battery pack 200 (see FIG. 8) is manufactured by, for example, electrically connecting a plurality of the electrical energy storage devices 100 to each other. The provision of the extension part 41b can sufficiently secure the grounding surface area with the bus bar 90, and can improve the conduction reliability of the battery pack 200.

The second conductive member 42 is a member extending from the inside to the outside of the battery case 20 through the terminal extraction hole 24h. The second conductive member 42 is formed of a second metal, which is different from the first metal. The second conductive member 42 is, for example, formed of a conductive metal such as copper, a copper alloy, nickel, or stainless steel. The second conductive member 42 is preferably formed of copper or a copper alloy. The second conductive member 42 is formed of copper here. The second conductive member 42 is preferably formed of a metal with a larger Vickers hardness (harder) than the first conductive member 41. The second conductive member 42 may be formed of the same metal as that of the negative electrode current collecting member 14, or an alloy having the same metal element as the first component. A metal-coated part coated with a metal such as Ni may be provided partially or entirely on the surface of the second conductive member 42.

The second conductive member 42 has an axis center C as illustrated in FIG. 5 and FIG. 6. Here, the second conductive member 42 includes the flange part 42f electrically connected to the first conductive member 41, the shaft part 42s coupled to the lower end part of the flange part 42f, and the tubular part 42p existing at an end part (lower end part) of the shaft part 42s on the side opposite to the side where the flange part 42f exists. The second conductive member 42 preferably includes the flange part 42f and the shaft part 42s coupled to one surface of the flange part 42f. The second conductive member 42 preferably has the flange part 42f disposed in the first concave part 41r of the first conductive member 41.

The flange part 42f has a larger outer shape than that of the shaft part 42s. The flange part 42f is a part protruding out of the battery case 20 through the terminal extraction hole 24h of the lid body 24. As illustrated in FIG. 3, the outer shape of the flange part 42f is larger than that of the terminal extraction hole 24h of the lid body 24. The outer shape of the flange part 42f is a substantially cylindrical columnar shape here. As illustrated in FIG. 6, an axis center of the flange part 42f coincides with the axis center C of the second conductive member 42. The thickness Tf of the part of the flange part 42f that protrudes from the first concave part 41r is preferably 0.5 to 5 mm, more preferably 1 to 3 mm, and for example 2.0 mm. The thickness Tf is larger than the thickness T1 of the first conductive member 41 here. The thickness Tf of the part of the flange part 42f that protrudes from the first concave part 41r and the thickness Tt of the thin part 41t of the first conductive member 41 preferably satisfy the expression: Tf/Tt > 3. Thus, the ultrasonic bonding part 45 with high strength can be formed more stably. The flange part 42f includes the lower surface 42d, a side surface (outer peripheral surface) 42o extending upward from the lower surface 42d, and the constriction part 42n at which a part of the side surface 42o is constricted.

The constriction part 42n is provided continuously or intermittently in a part of the side surface 42o of the flange part 42f. The constriction part 42n is preferably fastened mechanically to the first conductive member 41 (for example, to an inner side surface of the first concave part 41r). Although the illustration is omitted, the constriction part 42n has a ring shape (for example, annular shape) in the plan view here. The constriction part 42n is formed axis-symmetrically about the axis center C of the flange part 42f. The constriction part 42n is formed to have an inverted-tapered shape with the diameter increasing toward the upper surface 41u (in other words, the diameter increasing with an increasing distance from the shaft part 42s). The constriction part 42n is inserted into the first concave part 41r of the first conductive member 41. The constriction part 42n is fitted into the first concave part 41r of the first conductive member 41, so as to be engaged with the first concave part 41r here. The constriction part 42n is an example of a part disposed in the concave part.

As illustrated in FIG. 5, the shaft part 42s extends downward from the lower end part of the flange part 42f. As illustrated in FIG. 3, the shaft part 42s is preferably inserted into the terminal extraction hole 24h of the lid body 24 at the time of attachment of the negative electrode terminal 40 to the lid body 24. The outer shape of the shaft part 42s is a cylindrical shape here as illustrated in FIG. 5 and FIG. 6. The axis center of the shaft part 42s coincides with the axis center C of the second conductive member 42. The lower end part of the shaft part 42s, that is, the end part on the side opposite to the side where the flange part 42f exists is hollow before the caulking process. The lower end part of the shaft part 42s forms the tubular part 42p. The tubular part 42p has a hollow cylindrical shape here. The tubular part 42p extends along the up-down direction Z. The tubular part 42p is a part that is spread out by the caulking process when the negative electrode terminal 40 is attached to the lid body 24, thereby forming the caulking part 40c. The tubular part 42p is preferably electrically connected to the negative electrode current collecting member 14 inside the battery case 20 by the caulking process.

The fastening part 43 is a coupling part at which the first conductive member 41 and the second conductive member 42 are mechanically fastened to each other. The fastening part 43 is provided on the outer peripheral side relative to the ultrasonic bonding part 45 in a radial direction of the penetration hole 41h. The fastening part 43 is configured in such a way that a part of an inner wall of the first concave part 41r of the first conductive member 41 enters the constriction part 42n of the second conductive member 42 here. Thus, the inner wall of the first concave part 41r of the first conductive member 41 is fixed (for example, fixed by pressing) by the constriction part 42n of the second conductive member 42. It is preferable that the fastening part 43 be formed in such a way that the inner wall of the first concave part 41r of the first conductive member 41 and the side surface 42o of the flange part 42f of the second conductive member 42 are fastened. Accordingly, the strength of the fastening part 43 can be enhanced. Here, the fastening part 43 is formed continuously. In the plan view, the fastening part 43 has a ring shape (for example, annular shape) here. As a result, it becomes possible to increase the strength of the fastening part 43 and to improve the conduction reliability of the negative electrode terminal 40.

The method for forming the fastening part 43 is not particularly limited as long as mechanical bonding based on mechanical energy is used, and may be, for example, press-fitting, shrink-fitting, caulking, riveting, folding, bolt bonding, or the like. In some preferred embodiments, the fastening part 43 is an engagement part at which the first concave part 41r of the first conductive member 41 and the constriction part 42n of the second conductive member 42 are engaged with each other. As a result, for example, the first conductive member 41 and the second conductive member 42 can be suitably fixed even when the first conductive member 41 and the second conductive member 42 are formed of different kinds of metals. The fastening part 43 may be, for example, a press-fitting part in which the constriction part 42n of the second conductive member 42 is fitted by press-fitting into the first concave part 41r of the first conductive member 41.

The ultrasonic bonding part 45 is a metal bonding part in which the first conductive member 41 and the second conductive member 42 are bonded to each other with ultrasonic waves. The ultrasonic bonding part 45 is provided in the periphery of the penetration hole 41h. The ultrasonic bonding part 45 is provided at a position apart from the penetration hole 41h here. The ultrasonic bonding part 45 is provided in the thin part 41t here. The ultrasonic bonding part 45 is provided at a position apart from the fastening part 43 here. The ultrasonic bonding part 45 is provided on the inner peripheral side (central side) relative to the fastening part 43 in the radial direction of the penetration hole 41h. The ultrasonic bonding part 45 can be a bonding part whose strength is lower (more fragile) than that of the fastening part 43. By arranging the ultrasonic bonding part 45 as above on the inner peripheral side of the fastening part 43, it becomes possible to stably maintain the ultrasonic bonding part 45, and to increase the conduction reliability of the negative electrode terminal 40 for a long time. Note that the ultrasonic bonding part 45 can be distinguished clearly from a part formed by, for example, laser welding or the like due to a pressing mark of a hone used in an ultrasonic bonding step to be described below.

The ultrasonic bonding part 45 is formed continuously or intermittently in the plan view. The ultrasonic bonding part 45 is preferably formed axis-symmetrically about the axis center C of the second conductive member 42 (for example, flange part 42f). In some preferred embodiments, the ultrasonic bonding part 45 is preferably formed continuously along a circumferential direction of the penetration hole 41h as illustrated in FIG. 4. The ultrasonic bonding part 45 preferably has a ring shape (for example, annular shape) in the plan view. As a result, it becomes possible to increase the strength of the ultrasonic bonding part 45 and to improve the conduction reliability of the negative electrode terminal 40.

As described above, the negative electrode terminal 40 includes two kinds of coupling parts with different coupling methods: the ultrasonic bonding part 45 and the fastening part 43 provided on the outer peripheral side relative to the ultrasonic bonding part 45. As a result, a state in which the first conductive member 41 and the second conductive member 42 are in close contact with each other can be readily maintained. Therefore, it becomes possible to stably maintain the conductive connection between the first conductive member 41 and the second conductive member 42, and to improve the conduction reliability of the negative electrode terminal 40.

### <Manufacturing method for negative electrode terminal 40>

The negative electrode terminal 40 as described above can be manufactured suitably by, for example, a manufacturing method including a fastening step of preparing the first conductive member 41 and the second conductive member 42 and mechanically fastening the first conductive member 41 and the second conductive member 42 and a bonding step of bonding the first conductive member 41 and the second conductive member 42 to each other with ultrasonic waves in this order. By performing the bonding step after the fastening step, it becomes possible to form the ultrasonic bonding part 45 with the stable shape at high accuracy. However, the order of the fastening step and the bonding step may be opposite, or the steps may be performed substantially simultaneously. The manufacturing method disclosed herein may further include another step at any stage.

In the fastening step, the first conductive member 41 and the flange part 42f of the second conductive member 42 are mechanically fastened to each other, thereby forming the fastening part 43. This step includes a disposing step of disposing a part of the second conductive member 42 (for example, a part including the constriction part 42n) in the first concave part 41r of the first conductive member 41. In other words, this step also functions as the disposing step. The fastening part 43 can be formed by, for example, disposing the constriction part 42n of the second conductive member 42 in the first concave part 41r of the first conductive member 41, and deforming the first concave part 41r of the first conductive member 41 along the outer shape of the constriction part 42n of the second conductive member 42, thereby fixing the inner wall of the first concave part 41r with the second conductive member 42. Thus, the strength of the fastening part 43 can be improved. In some preferred embodiments, the fastening part 43 is formed by engaging the first concave part 41r of the first conductive member 41 and the constriction part 42n of the second conductive member 42. For example, the fastening part 43 can be formed by horizontally press-fitting the constriction part 42n of the second conductive member 42 into the first concave part 41r of the first conductive member 41. The workability of the fastening step can be increased as a result.

In the bonding step, the ultrasonic bonding part 45 is formed in such a way that the periphery of the penetration hole 41h of the first conductive member 41 is bonded to the second conductive member 42 with ultrasonic waves while a part of the second conductive member 42 is disposed in the first concave part 41r of the first conductive member 41. A fragile intermetallic compound is formed at the bonding interface between the first conductive member 41 and the second conductive member 42 less easily in the ultrasonic bonding than in the laser welding, for example. Therefore, the metal bonding part with high strength can be formed stably. In some preferred embodiments, the ultrasonic bonding part 45 is formed by bonding the thin part 41t of the first conductive member 41 to the second conductive member 42 (for example, flange part 42f) with ultrasonic waves. Thus, the ultrasonic bonding part 45 can be easily formed stably. In addition, the energy at the bonding can be saved, so that the distortion or deformation of the first conductive member 41 can be suppressed more.

FIG. 9 is a longitudinal cross-sectional view schematically illustrating this step. In some preferred embodiments, first, an ultrasonic bonding apparatus including a hone 81 and an anvil (receiving jig) 82 is prepared. The hone 81 has a leg part 81a with an annular shape. Although the illustration is omitted, the hone 81 is attached to a pressing apparatus and an ultrasonic oscillation apparatus. The hone 81 is configured to apply ultrasonic vibration on a bonding object in a predetermined vibrating direction. The anvil 82 is attached to the pressing apparatus so as to face the hone 81. The anvil 82 has an outer shape that can be accommodated in the tubular part 42p (hollow part) of the second conductive member 42 here.

Next, as illustrated in FIG. 9, the periphery (here, the thin part 41t) of the penetration hole 41h of the first conductive member 41 and the part of the second conductive member 42 that is disposed in the first concave part 41r of the first conductive member 41 (a part of the flange part 42f here) are held between the hone 81 and the anvil 82. In this embodiment, the leg part 81a of the hone 81 is brought into contact with the thin part 41t of the first conductive member 41, and the anvil 82 is brought into contact with the shaft part 42s of the second conductive member 42. The anvil 82 is inserted into the tubular part 42p of the second conductive member 42. In this state, ultrasonic vibration is applied while a pressing load is applied by the hone 81. Then, the first conductive member 41 to which the hone 81 is pressed vibrates in synchronization with the hone 81.

The conditions of the pressing load and the ultrasonic vibration are, for example, design matters that can be adjusted as appropriate in accordance with the material and size of the first conductive member 41 and the second conductive member 42, the shape of the hone 81, and the like. Therefore, although not limited in particular, in some embodiments, the pressing load is preferably about 500 to 2000 N and more preferably 800 to 1200 N. The frequency of the ultrasonic vibration applied to the first conductive member 41 through the hone 81 is preferably about 10 to 50 kHz and more preferably 15 to 25 kHz. The oscillating time of the ultrasonic vibration is preferably about 0.5 to 1.5 seconds and more preferably 0.7 to 1.0 seconds. The vibrating direction of the hone 81 may be the short side direction X or the long side direction Y, for example.

In a region where the force of pressing the hone 81 operates, the bonding interface between the first conductive member 41 (here, thin part 41t) and the second conductive member 42 (here, flange part 42f) is subjected to solid-phase welding with the ultrasonic vibration. Thus, the ultrasonic bonding part 45 is formed in the periphery of the penetration hole 41h. Here, since the leg part 81a of the hone 81 is annular, the ultrasonic bonding part 45 is formed continuously (in an annular shape) along the circumferential direction of the penetration hole 41h. In some embodiments, as illustrated in FIG. 6, for example, an inner diameter Wi of the ultrasonic bonding part 45 is preferably 7 to 12 mm and an outer diameter Wo of the ultrasonic bonding part 45 is preferably 8 to 13 mm.

When a part of the second conductive member 42 is disposed in the first concave part 41r of the first conductive member 41, the connection reliability between the first conductive member 41 and the second conductive member 42 in the state of the terminal is improved. Moreover, by the ultrasonic bonding in the periphery of the penetration hole 41h as described in the embodiment, the region to be bonded with ultrasonic waves in the first conductive member 41 can be vibrated smoothly even when a part of the second conductive member 42 is disposed in the first concave part 41r of the first conductive member 41. Therefore, the energy can be saved and the deformation of the first conductive member 41 is suppressed. Additionally, even if the first conductive member 41 is deformed, such deformation can be absorbed (the wall flow can be absorbed) in the penetration hole 41h and the occurrence of the unintended distortion or deformation in the first conductive member 41 can be suppressed. Accordingly, it is possible to achieve suitably the state in which the connection state between the first conductive member 41 and the second conductive member 42 is stable. Thus, the terminal or the electrical energy storage device with higher reliability can be obtained. Note that it is particularly effective if the first conductive member 41 and the second conductive member 42 are fixed by the fastening part 43 on the outer peripheral side of the ultrasonic bonding part at the ultrasonic bonding of the first conductive member 41 and the second conductive member 42.

In the first embodiment, it is preferable to press the leg part 81a of the hone 81 in the vicinity of the penetration hole 41h in the case where the width of the thin part 41t is, for example, 7 mm or more or as large as 10 mm or more. Thus, the stress can be absorbed in the penetration hole 41h and the thin part 41t to make the first conductive member 41 easily vibrate more smoothly. Furthermore, the unintended large deformation of the first conductive member 41 can be suppressed more. In addition, since the ultrasonic bonding part 45 is formed in the vicinity of the penetration hole 41h (in other words, the ultrasonic bonding part 45 is formed apart from the fastening part 43), the burden from the bus bar 90 (see FIG. 8) can be reduced. Therefore, even if external force such as vibration or impact applies in the use of the electrical energy storage device 100, the conductive connection between the first conductive member 41 and the second conductive member 42 can be stably maintained and the conduction reliability of the negative electrode terminal 40 can be improved.

From such a viewpoint, in the first embodiment, when a distance between the penetration hole 41h and an inner peripheral edge of the ultrasonic bonding part 45 is D1 and a distance between an outer peripheral edge of the ultrasonic bonding part 45 and an outer peripheral edge of the thin part 41t is D2 in the radial direction of the penetration hole 41h as illustrated in FIG. 7, the ultrasonic bonding part 45 is preferably formed so that D1 becomes smaller than D2. That is to say, D1 < D2 is preferably satisfied. By bringing the ultrasonic bonding part 45 closer to the penetration hole 41h in this manner, the ultrasonic bonding part 45 with high strength can be formed more stably and the aforementioned effect can be achieved at a higher level. From such a viewpoint, D1/D2 is preferably less than 1, more preferably less than 0.8, and still more preferably less than 0.5. D1 is preferably 5 mm or less, more preferably 3 mm or less, and still more preferably 1 mm or less, for example. In the radial direction of the penetration hole 41h, a ratio (W2/W1) of a width W2 of the thin part 41t to a width W1 of the ultrasonic bonding part 45 is preferably 1 or more and more preferably more than 1.

In addition, in the first embodiment, as illustrated in FIG. 6, a difference (Wi - Wh) between the inner diameter Wi of the ultrasonic bonding part 45 and the outer diameter Wh of the penetration hole 41h is preferably 5 mm or less and more preferably 2 mm or less. The ultrasonic bonding part 45 is preferably apart from the penetration hole 41h. The difference (Wi - Wh) is preferably 0.1 mm or more. In addition, the outer diameter Wt of the thin part 41t, the outer diameter Wh of the penetration hole 41h, and the inner diameter Wi and the outer diameter Wo of the ultrasonic bonding part 45 preferably satisfy the expression: (Wt - Wo)/(Wi - Wh) > 1.

Furthermore, a ratio (Wt/Wh) of the outer diameter Wt of the thin part 41t to the outer diameter Wh of the penetration hole 41h is preferably 2 or more and more preferably 3 or more. By having the large thin part 41t in this manner, the ultrasonic bonding part 45 can be formed more stably.

In a second embodiment, in a case where the penetration hole 41h is as large as, for example, 5 mm or more, the leg part 81a of the hone 81 is preferably pressed in the vicinity of an outer peripheral edge of the penetration hole 41h and the outer peripheral edge of the thin part 41t. In the art disclosed herein, the wall flow can be absorbed in the penetration hole 41h; therefore, the ultrasonic bonding part 45 can be formed until just before the penetration hole 41h and the thin part 41t. Thus, the area of the ultrasonic bonding part 45 can be enlarged, the conduction resistance can be reduced, and the resistance can be reduced. Moreover, resistance heating can be suppressed and, for example, a thermal influence on a resin member such as the gasket 50 can be reduced.

From such a viewpoint, in the second embodiment, the distance D1 between the penetration hole 41h and the inner peripheral edge of the ultrasonic bonding part 45 in the radial direction of the penetration hole 41h is preferably 5 mm or less, more preferably 3 mm or less, and still more preferably 1 mm or less, for example, as illustrated in FIG. 7. In the radial direction of the penetration hole 41h, the ratio (W1/W2) of the width W1 of the ultrasonic bonding part 45 to the width W2 of the thin part 41t is preferably 0.5 or more and more preferably 0.7 or more. Thus, the conduction resistance can be reduced, and the resistance can be reduced further. Additionally, the resistance heating can be suppressed more.

In the second embodiment, as illustrated in FIG. 6, the difference (Wi - Wh) between the inner diameter Wi of the ultrasonic bonding part 45 and the outer diameter Wh of the penetration hole 41h is preferably 5 mm or less and more preferably 2 mm or less. The ultrasonic bonding part 45 is preferably apart from the penetration hole 41h. The difference (Wi - Wh) is preferably 0.1 mm or more. The difference (Wt - Wo) between the outer diameter Wt of the thin part 41t and the outer diameter Wo of the ultrasonic bonding part 45 is preferably 5 mm or less and more preferably 2 mm or less. The ultrasonic bonding part 45 is preferably apart from an outer edge of the thin part 41t. The difference (Wt - Wo) is preferably 0.1 mm or more. Contrary to the first embodiment, the outer diameter Wt of the thin part 41t, the outer diameter Wh of the penetration hole 41h, and the inner diameter Wi and the outer diameter Wo of the ultrasonic bonding part 45 preferably satisfy the expression (Wt - Wo)/(Wi - Wh) < 1.

In addition, the ratio (Wt/Wh) of the outer diameter Wt of the thin part 41t to the outer diameter Wh of the penetration hole 41h is preferably 2 or more and more preferably 3 or more. By enlarging the penetration hole 41h in this manner, the aforementioned effect can be exerted at a higher level.

### <Manufacturing method for electrical energy storage device 100>

The electrical energy storage device 100 is characterized by using the positive electrode terminal 30 and/or the negative electrode terminal 40 manufactured in accordance with the manufacturing method as described above. The manufacturing process except the above point may be similar to the conventional one. The electrical energy storage device 100 can be manufactured in accordance with, for example, a manufacturing method that includes preparing the electrode body 10, the electrolyte, the case main body 22, the lid body 24, the positive electrode terminal 30, and the negative electrode terminal 40 as described above, and the manufacturing method includes an attaching step and a case bonding step in this order.

In the attaching step, the positive electrode terminal 30, the positive electrode current collecting member 13, the negative electrode terminal 40, and the negative electrode current collecting member 14 are attached to the lid body 24 and integrated. The negative electrode terminal 40 and the negative electrode current collecting member 14 are fixed to the lid body 24 by the caulking process (riveting) as illustrated in FIG. 3, for example. In some preferred embodiments, this step includes an inserting step and a caulking step in this order. In the inserting step, a part of the second conductive member 42 of the negative electrode terminal 40 (here, the shaft part 42s before the caulking process) is inserted into the hole part 14h of the negative electrode current collecting member 14. Specifically, the shaft part 42s before the caulking process of the negative electrode terminal 40 is caused to sequentially pass, from above the lid body 24, through the cylindrical part 51 of the gasket 50, the terminal extraction hole 24h of the lid body 24, the hole part 60h of the insulator 60, and the hole part 14h of the negative electrode current collecting member 14. Thus, the tubular part 42p of the negative electrode terminal 40 protrudes downward from the hole part 14h of the negative electrode current collecting member 14.

In the caulking step, the second conductive member 42 of the negative electrode terminal 40 is caulked on the negative electrode current collecting member 14. Specifically, the tubular part 42p protruding from the hole part 14h of the negative electrode current collecting member 14 is caulked on the negative electrode current collecting member 14 so that a compression force is applied in the up-down direction Z. The caulking process is performed here in such a way that the gasket 50 is held between the negative electrode terminal 40 and the lid body 24 and moreover that the insulator 60 is held between the lid body 24 and the negative electrode current collecting member 14. The caulking part 40c is formed accordingly at a tip end part (lower end part in FIG. 3) of the shaft part 42s of the negative electrode terminal 40.

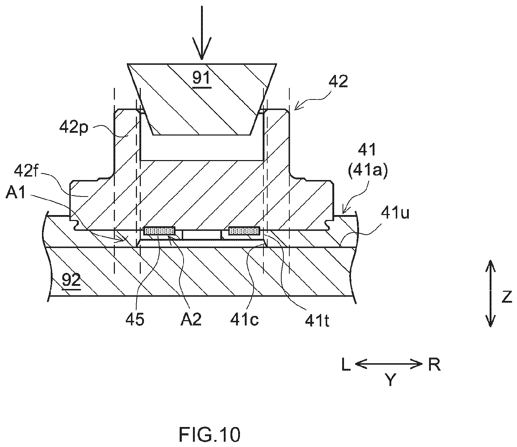

FIG. 10 is a longitudinal cross-sectional view illustrating schematically one example of this step. In FIG. 10, the illustration of the lid body 24, the gasket 50, the insulator 60, and the negative electrode current collecting member 14 is omitted. In some preferred embodiments, first, as illustrated in FIG. 10, a caulking apparatus including a punch (pressing jig) 91 and a die (receiving jig) 92 is prepared. The die 92 has a flat surface here. Next, the negative electrode terminal 40 is inverted in the up-down direction and disposed on the flat surface of the die 92. This arrangement makes the upper surface 41u of the first conductive member 41 (at least connection part 41a) face the die 92. The thin part 41t of the first conductive member 41 floats from the die 92. The second conductive member 42 is not in contact with the die 92.

Next, a tip end of the punch 91 is inserted into the tubular part 42p (hollow part) of the second conductive member 42. As indicated by an arrow in FIG. 10, then, a compression force is applied in a direction where the tubular part 42p extends (a direction where the axis center C extends, here the up-down direction Z), so that the tubular part 42p is spread out and deformed by the tip end of the punch 91. Thus, the tubular part 42p is plastically deformed so as to embrace an outer edge part. As a result, the caulking part 40c is formed on the negative electrode current collecting member 14 and each component is fixed by caulking.

In this embodiment, the first conductive member 41 includes the second concave part 41c on the upper surface 41u. In this case, when a region of the first conductive member 41 that overlaps with the tubular part 42p in the direction where the tubular part 42p extends (up-down direction Z in FIG. 10) is the first region A1 and a region thereof where the ultrasonic bonding part 45 is formed is a second region A2, the first region A1 protrudes downward relative to the second region A2 (protrudes in a direction of separating from the second conductive member 42). The term "downward" corresponds to one example of a direction perpendicular to a surface where the terminal of the battery case is attached. The first region A1 is an annular region overlapping with the tubular part 42p in the plan view here. The first region A1 is mostly in contact with the die 92 here. The second region A2 is a region on the inner peripheral side (close to the penetration hole 41h) relative to the first region A1.

Since the first region A1 protrudes downward relative to the second region A2, a lower part of the tubular part 42p can be received by the die 92, thereby making it easier to caulk the tubular part 42p. Since the second region A2 is depressed relative to the first region A1 (the second region A2 exists above the first region A1), it is difficult to apply the compression force of the caulking process in the region where the ultrasonic bonding part 45 is formed. Therefore, the burden on the ultrasonic bonding part 45 can be reduced and the damage of the ultrasonic bonding part 45 can be effectively suppressed.

As a result of such a caulking process, the base part 52 of the gasket 50 and the flat plate-shaped part of the insulator 60 are compressed, the gasket 50, the lid body 24, the insulator 60, and the negative electrode current collecting member 14 are fixed integrally to the lid body 24, and the terminal extraction hole 24h is sealed. The attaching method for the positive electrode terminal 30 and the positive electrode current collecting member 13 may also be similar to that for the negative electrode terminal 40 and the negative electrode current collecting member 14 described above. The negative electrode current collecting member 14 is welded to the negative electrode current collector exposed part of the negative electrode current collector 12, and the negative electrode of the electrode body 10 and the negative electrode terminal 40 are electrically connected to each other. Similarly, the positive electrode current collecting member 13 is welded to the positive electrode current collector exposed part of the positive electrode current collector 11, and the positive electrode of the electrode body 10 and the positive electrode terminal 30 are electrically connected to each other. The lid body 24, the positive electrode terminal 30, the negative electrode terminal 40, and the electrode body 10 are integrated with each other accordingly.

In the case bonding step, the electrode body 10 integrated with the lid body 24 is accommodated in an interior space of the case main body 22, and the lid body 24 is bonded by welding to a periphery of the opening part 22h of the case main body 22. The bonding by welding can be performed by a conventionally known method (for example, laser welding). Thus, the opening part 22h of the case main body 22 is sealed to integrate the case main body 22 and the lid body 24. After that, a nonaqueous electrolyte solution is injected through a liquid injection port, which is not illustrated, and the liquid injection port is covered, thereby sealing the electrical energy storage device 100. The electrical energy storage device 100 can be manufactured in the above-described manner.

The electrical energy storage device 100 can be used in various applications and, for example, can be suitably utilized as a power source (driving power source) for motors mounted in various kinds of vehicles such as a passenger car and a truck. The vehicle is not limited to a particular type, and may be, for example, a plug-in hybrid electric vehicle (PHEV), a hybrid electric vehicle (HEV), or a battery electric vehicle (BEV).

As illustrated in FIG. 8, the electrical energy storage device 100 can suitably be used also as the battery pack 200 in which the electrical energy storage devices 100 are electrically connected to each other through the bus bars 90. In this case, the electrical energy storage devices 100 can be electrically connected to each other for example by spanning the bus bars 90 with a flat shape across the extension parts 41b of the respective first conductive members 41. The bus bar 90 is, for example, formed of a conductive metal such as aluminum, an aluminum alloy, nickel, or stainless steel. The bus bar 90 and the extension part 41b can be electrically connected to each other by welding such as laser welding.

Although some embodiments of the present disclosure have been described above, the above-described embodiments are merely examples. The present disclosure can be implemented in various other modes. The present disclosure can be implemented based on the contents disclosed in the present specification and the technical common sense in the relevant field. The techniques described in the scope of claims include those in which the embodiments exemplified above are variously modified and changed. For example, another modification can replace a part of the aforementioned embodiment or be added to the aforementioned embodiment. Additionally, the technical feature may be deleted as appropriate unless such a feature is described as an essential element.
(1) For example, in the aforementioned embodiment, the fastening part 43 is the engagement part (for example, press-fitting part). However, the present disclosure is not limited to this example. The fastening part 43 may be, for example, the caulking part.
(2) For example, in the aforementioned embodiment, the first conductive member 41 includes the thin part 41t, and the ultrasonic bonding part 45 is formed in the thin part 41t. The ultrasonic bonding part 45 is provided at a position apart from the penetration hole 41h. However, the present disclosure is not limited to this example. In another example, the ultrasonic bonding part 45 may be formed other than in the thin part 41t, or may be formed along an outer edge of the penetration hole 41h.
(3) For example, in the aforementioned embodiment, the ultrasonic bonding part 45 is annular in the plan view and is formed continuously along the circumferential direction of the penetration hole 41h. However, the present disclosure is not limited to this example. The ultrasonic bonding part 45 may include a plurality of parts that are disposed at positions apart from each other. This structure can secure the space to which the wall escapes from the surface subjected to the pressing load; thus, the distortion and deformation of the first conductive member 41 can be suppressed more.

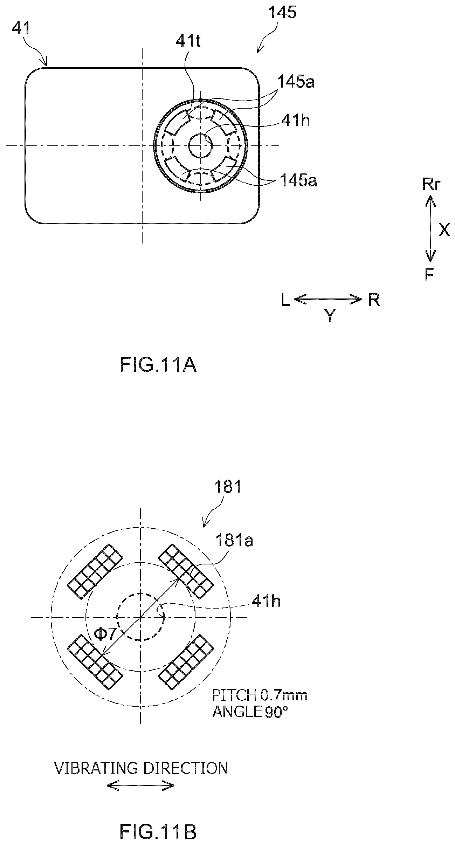

FIG. 11A is a plan view schematically illustrating an ultrasonic bonding part 145 according to a modification. The ultrasonic bonding part 145 includes a plurality of (here, four) bonding parts 145a. As indicated by dashed lines in FIG. 11A, there are spaces between the bonding parts 145a. The bonding parts 145a are disposed at positions apart from each other. The bonding parts 145a have the same shape here. Each of the bonding parts 145a has an arc shape or a linear shape here. The bonding parts 145a are preferably arranged at intervals in an annular shape. The bonding parts 145a are preferably disposed at equal intervals and more preferably disposed point-symmetrically about the center of the penetration hole 41h. The ultrasonic bonding part 145 preferably has an annular shape that is partially cut (dotted-line annular shape). The bonding parts 145a are preferably disposed avoiding a straight line passing the center of the penetration hole 41h and extending in the vibrating direction of ultrasonic waves (here, the short side direction X or the long side direction Y). Here, the bonding parts 145a are disposed in linear shapes extending from the center of the penetration hole 41h to four corner parts of the first conductive member 41 with a rectangular shape.

The ultrasonic bonding part 145 as described above can be formed using a hone 181 including a plurality of (here, four) leg parts 181a as illustrated in FIG. 11B, for example, instead of the hone 81 including the annular leg part 81a in the aforementioned bonding step. A lower surface of the leg part 181a has an uneven structure where protrusions and groove parts are formed alternately. In this case, it is preferable to bring the leg parts 181a of the hone 181 in contact with the first conductive member 41 so as not to touch the straight line passing the center of the penetration hole 41h and extending in the vibrating direction of ultrasonic waves (here, the short side direction X or the long side direction Y). Thus, the deformation of the first conductive member 41 into an unintended shape at the ultrasonic bonding can be suppressed and the distortion or swelling of the vicinity of the ultrasonic bonding part 45 can be suppressed.

(4) For example, in the aforementioned embodiment in FIG. 10, the second conductive member 42 that is plastically deformed is not in contact with the die (receiving jig) 92 in the aforementioned caulking step. However, the present disclosure is not limited to this example. The second conductive member 42 may be in contact with the die 92. Such a structure can be employed particularly suitably when the Vickers hardness of the second conductive member 42 is larger than that of the first conductive member 41 in particular.

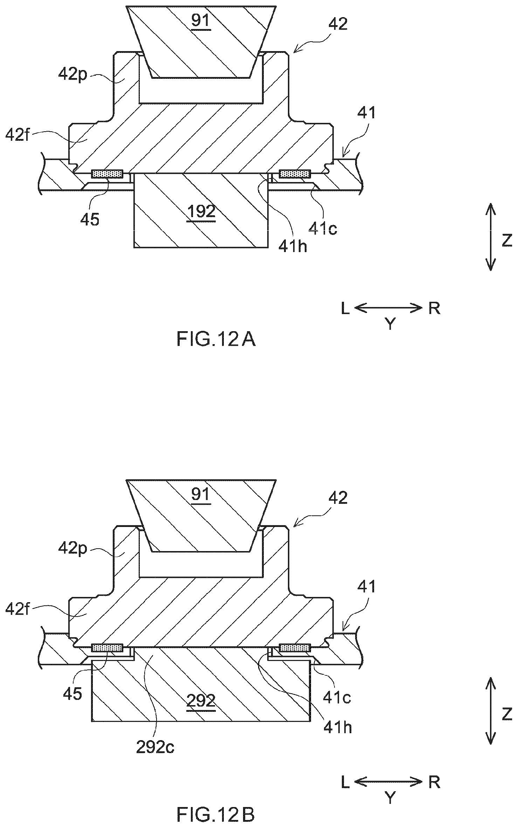

FIG. 12A is a view corresponding to FIG. 10 according to a first modification. In this modification, a die 192 of a caulking apparatus has an outer shape that can be inserted into the penetration hole 41h of the first conductive member 41. The die 192 is inserted into the penetration hole 41h of the first conductive member 41 and is in contact with the second conductive member 42 (specifically, flange part 42f). The die 192 is not in contact with the first conductive member 41 here. The die 192 is preferably not in contact with the first conductive member 41. However, the die 192 may be in contact with a part of the first conductive member 41. In this modification, a part (tubular part 42p) of the second conductive member 42 is caulked with the die 192 in contact with the second conductive member 42, so that a part of the second conductive member 42 is deformed to form the caulking part 40c. Using the die 192 prevents the overlap between the ultrasonic bonding part 45 and the die 192 in the direction where the compression force is applied (here, up-down direction Z). Thus, the burden is not easily applied on the first conductive member 41 or the ultrasonic bonding part 45. Accordingly, the unintended distortion or deformation in the first conductive member 41 can be suppressed effectively. In addition, the damage of the ultrasonic bonding part 45 can be suppressed effectively.

FIG. 12B is a view corresponding to FIG. 10 according to a second modification. In this modification, a die 292 of a caulking apparatus includes a convex part 292c that can be inserted into the penetration hole 41h of the first conductive member 41. The convex part 292c is inserted into the penetration hole 41h of the first conductive member 41 and is in contact with the second conductive member 42 (specifically, flange part 42f). In addition, a part of the die 292 is also in contact with the first conductive member 41. Thus, the second conductive member 42 can receive at least some load; therefore, the burden on the first conductive member 41 or the ultrasonic bonding part 45 can be reduced compared to a case in which the entire compression force is applied to the first conductive member 41. Accordingly, it is possible to effectively suppress the occurrence of the unintended distortion or deformation in the first conductive member 41. Additionally, the damage of the ultrasonic bonding part 45 can be suppressed effectively.

(5) For example, in the aforementioned embodiment, the tubular part 42p of the negative electrode terminal 40 is deformed and caulked, so that the negative electrode terminal 40 is fixed on the negative electrode current collecting member 14, and the negative electrode terminal 40 and the negative electrode current collecting member 14 are electrically connected to each other. However, the present disclosure is not limited to this example. The method for electrically connecting the negative electrode current collecting member 14 and the negative electrode terminal 40 may be, for example, mechanical fixing other than the caulking process, may be metal bonding typified by welding, or may be a combination of the foregoing.

As described above, the following items are given as specific aspects of the art disclosed herein.
Item 1: The manufacturing method for the terminal for the electrical energy storage device including: the first conductive member that is formed of the first metal and includes, on the first surface, the concave part and the penetration hole provided in the concave part; the second conductive member that is formed of the second metal, which is different from the first metal, and includes the part disposed in the concave part; the ultrasonic bonding part where the first conductive member and the second conductive member are bonded to each other with ultrasonic waves in the periphery of the penetration hole; and the fastening part where the first conductive member and the second conductive member are mechanically fastened on the outer peripheral side relative to the ultrasonic bonding part, the manufacturing method including: the disposing step of disposing a part of the second conductive member in the concave part of the first conductive member; and the bonding step of bonding the periphery of the penetration hole of the first conductive member to the second conductive member with ultrasonic waves after the disposing step.
Item 2: The manufacturing method according to Item 1, in which the thin part is provided in the periphery of the penetration hole of the first conductive member, the thin part is thinner than the outer peripheral side part of the thin part, and the thin part is bonded to the second conductive member with ultrasonic waves in the bonding step.
Item 3: The manufacturing method according to Item 2, in which in the bonding step, in the radial direction of the penetration hole, the distance D1 between the penetration hole and the inner peripheral edge of the ultrasonic bonding part is made smaller than the distance D2 between the outer peripheral edge of the ultrasonic bonding part and the outer peripheral edge of the thin part (D 1 < D2).
Item 4: The manufacturing method according to Item 2 or 3, in which in the bonding step, ultrasonic bonding is performed so that the ratio (W1/W2) of the width W1 of the ultrasonic bonding part to the width W2 of the thin part becomes 0.5 or more in the radial direction of the penetration hole.
Item 5: The manufacturing method according to any one of Items 1 to 3, in which the ultrasonic bonding part includes the plurality of parts that are disposed at the positions apart from each other.
Item 6: The manufacturing method for the electrical energy storage device including the electrode body that includes the first electrode and the second electrode, the battery case that accommodates the electrode body, the terminal that is attached to the battery case, and the current collecting member that electrically connects the first electrode and the terminal inside the battery case, in which the terminal includes: the first conductive member that is formed of the first metal and includes, on the first surface, the concave part and the penetration hole provided in the concave part; the second conductive member that is formed of the second metal, which is different from the first metal, and includes the part disposed in the concave part; the ultrasonic bonding part where the first conductive member and the second conductive member are bonded to each other with ultrasonic waves in the periphery of the penetration hole; and the fastening part where the first conductive member and the second conductive member are mechanically fastened on the outer peripheral side relative to the ultrasonic bonding part, and the manufacturing of the terminal includes: the disposing step of disposing a part of the second conductive member in the concave part of the first conductive member; and the bonding step of bonding the periphery of the penetration hole of the first conductive member to the second conductive member with ultrasonic waves after the disposing step.
Item 7: The manufacturing method according to Item 6, in which the thin part is provided in the periphery of the penetration hole of the first conductive member, the thin part is thinner than the outer peripheral side part of the thin part, and the thin part is bonded to the second conductive member with ultrasonic waves in the bonding step.
Item 8: The manufacturing method according to Item 7, in which in the bonding step, in the radial direction of the penetration hole, the distance D1 between the penetration hole and the inner peripheral edge of the ultrasonic bonding part is made smaller than the distance D2 between the outer peripheral edge of the ultrasonic bonding part and the outer peripheral edge of the thin part (D 1 < D2).
Item 9: The manufacturing method according to any one of Items 6 to 8, in which the current collecting member includes the hole part, and the manufacturing method further includes the inserting step of inserting a part of the second conductive member of the terminal into the hole part of the current collecting member, and the caulking step of caulking a part of the second conductive member of the terminal on the current collecting member after the inserting step.
Item 10: The manufacturing method according to Item 9, in which the second conductive member includes the hollow tubular part, the tubular part is caulked to the current collecting member in the caulking step, and when the region of the first conductive member that overlaps with the tubular part in the direction where the tubular part extends is the first region and the region thereof where the ultrasonic bonding part is formed is the second region, the first region protrudes in the direction of separating from the second conductive member relative to the second region in the direction perpendicular to the surface of the battery case where the terminal is attached.
Item 11: The manufacturing method according to Item 9 or 10, in which in the caulking step, the receiving jig is inserted into the penetration hole of the first conductive member to be in contact with the second conductive member and by pressing the second conductive member with the pressing jig, a part of the second conductive member is deformed.

### [Reference Signs List]

- 10: Electrode body
- 14: Negative electrode current collecting member (current collecting member)
- 20: Battery case
- 24: Lid body
- 40: Negative electrode terminal (terminal)
- 40c: Caulking part
- 41: First conductive member
- 41d: Lower surface (first surface)
- 41h: Penetration hole
- 41r: First concave part
- 41t: Thin part
- 42: Second conductive member
- 42f: Flange part
- 42n: Constriction part (part disposed in concave part)
- 42p: Tubular part
- 43: Fastening part
- 45, 145: Ultrasonic bonding part
- 100: Electrical energy storage device

## Claims

1. A manufacturing method for a terminal (40) for an electrical energy storage device including:
a first conductive member (41) that is formed of a first metal and includes, on a first surface (41d), a concave part (41r) and a penetration hole (41h) provided in the concave part (41r);
a second conductive member (42) that is formed of a second metal, which is different from the first metal, and includes a part (42n) disposed in the concave part (41r);
an ultrasonic bonding part (45) where the first conductive member (41) and the second conductive member (42) are bonded to each other with ultrasonic waves in a periphery of the penetration hole (41h); and
a fastening part (43) where the first conductive member (41) and the second conductive member (42) are mechanically fastened on an outer peripheral side relative to the ultrasonic bonding part (45), the manufacturing method comprising:
a disposing step of disposing a part of the second conductive member (42) in the concave part (41r) of the first conductive member (41); and
a bonding step of bonding the periphery of the penetration hole (41h) of the first conductive member (41) to the second conductive member (42) with ultrasonic waves after the disposing step.

2. The manufacturing method according to claim 1, wherein
a thin part (41t) is provided in the periphery of the penetration hole (41h) of the first conductive member (41),
the thin part (41t) is thinner than an outer peripheral side part of the thin part (41t), and
the thin part (41t) is bonded to the second conductive member (42) with ultrasonic waves in the bonding step.

3. The manufacturing method according to claim 2, wherein in the bonding step, in a radial direction of the penetration hole (41h), a distance D1 between the penetration hole (41h) and an inner peripheral edge of the ultrasonic bonding part (45) is made smaller than a distance D2 between an outer peripheral edge of the ultrasonic bonding part (45) and an outer peripheral edge of the thin part (41t) (D1 < D2).

4. The manufacturing method according to claim 2 or 3, wherein in the bonding step, ultrasonic bonding is performed so that a ratio (W1/W2) of a width W1 of the ultrasonic bonding part (45) to a width W2 of the thin part (41t) becomes 0.5 or more in the radial direction of the penetration hole (41h).

5. The manufacturing method according to any one of claims 1 to 3, wherein the ultrasonic bonding part (45) includes a plurality of parts that are disposed at positions apart from each other.

6. A manufacturing method for an electrical energy storage device (100) including an electrode body (10) that includes a first electrode and a second electrode, a battery case (20) that accommodates the electrode body (10), a terminal (40) that is attached to the battery case (20), and a current collecting member (14) that electrically connects the first electrode and the terminal (40) inside the battery case (20), wherein
the terminal (40) includes:
a first conductive member (41) that is formed of a first metal and includes, on a first surface (41d), a concave part (41r) and a penetration hole (41h) provided in the concave part (41r);
a second conductive member (42) that is formed of a second metal, which is different from the first metal, and includes a part (42n) disposed in the concave part (41r);
an ultrasonic bonding part (45) where the first conductive member (41) and the second conductive member (42) are bonded to each other with ultrasonic waves in a periphery of the penetration hole (41h); and
a fastening part (43) where the first conductive member (41) and the second conductive member (42) are mechanically fastened on an outer peripheral side relative to the ultrasonic bonding part (45), and
manufacturing of the terminal (40) comprises:
a disposing step of disposing a part of the second conductive member (42) in the concave part (41r) of the first conductive member (41); and
a bonding step of bonding the periphery of the penetration hole (41h) of the first conductive member (41) to the second conductive member (42) with ultrasonic waves after the disposing step.

7. The manufacturing method for the electrical energy storage device (100) according to claim 6, wherein
a thin part (41t) is provided in the periphery of the penetration hole (41h) of the first conductive member (41),
the thin part (41t) is thinner than an outer peripheral side part of the thin part (41t), and
the thin part (41t) is bonded to the second conductive member (42) with ultrasonic waves in the bonding step.

8. The manufacturing method for the electrical energy storage device (100) according to claim 7, wherein in the bonding step, in a radial direction of the penetration hole (41h), a distance D1 between the penetration hole (41h) and an inner peripheral edge of the ultrasonic bonding part (45) is made smaller than a distance D2 between an outer peripheral edge of the ultrasonic bonding part (45) and an outer peripheral edge of the thin part (41t) (D1 < D2).

9. The manufacturing method for the electrical energy storage device (100) according to any one of claims 6 to 8, wherein
the current collecting member (14) includes a hole part (14h), and
the manufacturing method further comprises an inserting step of inserting a part of the second conductive member (42) of the terminal (40) into the hole part (14h) of the current collecting member (14), and a caulking step of caulking a part of the second conductive member (42) of the terminal (40) on the current collecting member (14) after the inserting step.

10. The manufacturing method for the electrical energy storage device (100) according to claim 9, wherein
the second conductive member (42) includes a hollow tubular part (42p),
the tubular part (42p) is caulked to the current collecting member (14) in the caulking step, and
when a region of the first conductive member (41) that overlaps with the tubular part (42p) in a direction where the tubular part (42p) extends is a first region (A1) and a region thereof where the ultrasonic bonding part (45) is formed is a second region (A2), the first region (A1) protrudes in a direction of separating from the second conductive member (42) relative to the second region (A2) in a direction perpendicular to a surface of the battery case (20) where the terminal (40) is attached.

11. The manufacturing method for the electrical energy storage device (100) according to claim 9 or 10, wherein in the caulking step, a receiving jig (92) is inserted into the penetration hole (41h) of the first conductive member (41) to be in contact with the second conductive member (42) and by pressing the second conductive member (42) with a pressing jig (91), a part of the second conductive member (42) is deformed.
